# FASCICULE DE BREVET EUROPEEN

(11) **EP 2 324 558 B1**
(45) Date de publication et mention de la délivrance du brevet: **04.04.2012**
(21) Numéro de dépôt: 09782510.3
(22) Date de dépôt: 02.09.2009
(51) Int. Cl.: H02K 1/28, H02K 11/00, H02K 15/16

(54) **DISPOSITIF DE MONTAGE D'UN RESOLVER DANS UNE MACHINE ÉLECTRIQUE**
EINRICHTUNG ZUR ANBRINGUNG EINES DREHGEBERS IN EINER ELEKTRISCHEN MASCHINE
DEVICE FOR MOUNTING A RESOLVER IN AN ELECTRIC MACHINE

(30) Priorité: 03.09.2008 FR 0855900
(43) Date de publication de la demande: 25.05.2011
(73) Titulaire: Société de Technologie MICHELIN, 63000 Clermont-Ferrand (FR); MICHELIN Recherche et Technique S.A., 1763 Granges-Paccot (CH)
(72) Inventeur: VEDY, Bertrand, CH-1814 La Tour De Peilz (CH)
(74) Mandataire: Bauvir, Jacques
(86) Numéro de dépôt international: PCT/EP2009/061341
(87) Numéro de publication internationale: WO 2010/026159

(56) Documents cités:
- DE-A1- 19 546 595
- DE-A1-102004 028 877
- JP-A- 2005 318 745
- US-A- 3 267 399
- US-A- 3 939 372
- US-A1- 2006 226 719
- US-A1- 2007 205 679

## Description

### DOMAINE DE L'INVENTION

La présente invention est relative aux machines électriques tournantes. Elle vise notamment des machines capables de mettre en oeuvre des puissances importantes sous un format très compact, notamment lorsqu'elles fonctionnent en moteur, par exemple pour des applications de traction à bord des véhicules automobiles.

### ETAT DE LA TECHNIQUE

Les propositions de véhicules électriques se sont multipliées ces dernières années. On a vu apparaître des moteurs électriques dont la puissance peut atteindre par exemple 20, voire 30 kW dans un encombrement compatible avec l'intérieur d'une roue de véhicule ou son environnement immédiat dans le cas d'un véhicule comprenant une machine électrique pour chaque roue. Compte tenu de la puissance électrique importante mise en oeuvre par ces machines dans un espace restreint, l'agencement des organes fonctionnels tels que le stator, le rotor et les éléments accessoires nécessaires au pilotage de la machine à l'intérieur de la carcasse reste une préoccupation essentielle pour les concepteurs de ce type de machines.

Selon un mode de construction connu dans l'état de la technique, par exemple par le document de brevet EP 1 174 988, une machine électrique convenable pour les nouvelles applications à l'automobile comprend un stator logé dans un fourreau de telle façon que les parties terminales de ce dernier s'étendent axialement vers l'extérieur au delà des extrémités du circuit magnétique statorique qui constitue la partie active du stator. Ce circuit magnétique est parcouru par des encoches qui débouchent dans chacune de ses faces terminales. Les encoches sont remplies par des conducteurs qui forment des enroulements dans le circuit magnétique. Au sortir des encoches dans chaque face extrémité axiale du circuit magnétique, les conducteurs sont repliés en formant des boucles pour passer d'une encoche à la suivante, constituant ainsi des chignons qui sont abrités dans une partie terminale de la carcasse. Dans une des faces terminales du stator débouchent aussi les extrémités des conducteurs d'enroulement qui sont destinées à se raccorder électriquement avec un connecteur ou un boîtier de raccordement approprié. La connexion électrique des enroulements entre eux et avec l'extérieur permet, suivant le cas, soit de produire un couple de traction sur le rotor pour entraîner les roues du véhicule lorsque le circuit de ces enroulements est branché sur une alimentation alternative triphasée, soit de générer une énergie électrique triphasée si les enroulements de la machine sont branchés pour lui permettre de fonctionner en génératrice dans les phases de freinage.

De chaque côté du stator est prévu un flasque solidaire de la carcasse de la machine qui porte un des paliers de l'arbre du rotor. Sur l'un de ces côtés, l'arbre du rotor se prolonge au-delà de son palier de roulement de l'autre côté dudit flasque. Au bout de ce prolongement de l'arbre rotor est monté le rotor d'un resolver (ou résolveur) dont le stator est fixé dans un logement en extrémité de carcasse. Lorsque l'arbre de la machine électrique tourne, il entraîne le rotor du resolver qui produit à la sortie de son stator un signal électrique alternatif dont les caractéristiques de phase reflètent fidèlement et instantanément les changements de position angulaire du rotor de la machine. Dans une machine électrique auto pilotée, ce signal est utilisé pour asservir le courant dans les enroulements du stator au maintien d'un écart angulaire optimum (typiquement en quadrature) entre le champ magnétique tournant dans le stator et le champ magnétique engendré entre les pôles du rotor.

Dans le document mentionné ci-dessus, le logement du resolver peut-être fermé par un couvercle qui obture la partie centrale de l'extrémité de carcasse en bloquant le stator du resolver contre une butée annulaire autour du passage de l'arbre machine dans le flasque. Lors du montage, dans une telle réalisation, le resolver peut être monté dans la machine en engageant son rotor sur l'arbre et son stator dans le logement prévu à cet effet dans la carcasse jusqu'à ce que ces deux éléments atteignent une position axiale prescrite à l'intérieur de la machine qui est ensuite maintenue par la fermeture du couvercle. Avant de fermer le couvercle il convient d'ajuster la position angulaire du stator par rapport au rotor de telle manière que le signal de sortie des enroulements du resolver prenne une valeur déterminée à l'avance lorsque le décalage du rotor et du stator de la machine électrique est à sa valeur optimale. Cette condition est nécessaire si l'on souhaite pouvoir faire fonctionner le logiciel de conduite et d'asservissement du système avec les mêmes paramètres d'une machine à une autre.

Afin de satisfaire la condition susmentionnée, le rotor de resolver qui est calé en position fixe sur l'arbre du rotor machine est introduit dans le logement dans lequel a été préalablement positionné le stator avec ses connexions de liaison électrique avec l'extérieur de la machine. Le réglage s'effectue en faisant tourner le stator de resolver dans son logement jusqu' à ce que le signal de sortie atteigne la valeur de référence prescrite. A ce moment sa position est figée par le serrage radial d'un système de trois mâchoires installées à 120° dans le logement du stator, qui viennent bloquer la périphérie de ce dernier.

D'autres réalisations de montage d'un dispositif de réglage angulaire de la position d'un resolver sont par exemple décrits dans la demande de brevet US 2006/226719 du 12 octobre 2006 qui fait d'abord référence à deux modes de réalisation de l'état de la technique avant de décrire son objet proprement dit. Dans le premier mode de réalisation antérieur, un resolver est monté axialement à l'extérieur par rapport à l'intervalle des paliers de rotation du rotor moteur au bout duquel est fixé le rotor de resolver, d'une façon générale qui ressemble à l'exemple décrit précédemment. Dans le deuxième mode, un détecteur de position angulaire est réalisé à l'aide d'un capteur à effet Hall stationnaire devant lequel défile aimant permanent calé sur l'arbre du rotor moteur. Le capteur et l'aimant sont disposés axialement entre le rotor moteur et l'un des paliers support de l'arbre rotor. Le réglage circonférentiel du détecteur de position angulaire par rapport au moteur est effectué en faisant tourner la plaquette de montage du capteur à effet Hall par rapport à l'axe du moteur.

Quant à la réalisation qui fait l'objet proprement dit de la demande de brevet US 2006/226719 ci-dessus, elle comporte un résolver dont le stator est monté axialement entre les deux roulements d'un arbre moteur sur lequel est fixé le rotor du resolver. Le stator du resolver est inséré à l'intérieur d'un manchon qui est rattaché à un couvercle qui ferme une extrémité de la carcasse du moteur. Des fils de connexion du stator resolver traversent directement, suivant une orientation radiale, un espace qui sépare la périphérie du bobinage du stator et l'enveloppe extérieure de la machine vers un orifice de sortie garni d'un joint de protection. Selon un exemple de réalisation, un réglage angulaire du stator du resolver par rapport au moteur peut être effectué en faisant tourner le support du stator resolver par rapport au couvercle jusqu'à la position choisie. Le stator est ensuite bloqué à l'aide de trois organes de serrage répartis circonférentiellement.

Dans une autre réalisation décrite dans le brevet US 3267399 du 16 août 1966 un moteur pas à pas est décrit qui comporte une roue dentée calée sur le rotor en relation de coopération magnétique avec deux pièces magnétiques en fer à cheval portées par une plaque montage angulairement ajustable autour de l'axe du rotor. Entre les bras de chacune des pièces magnétique est enroulé un bobinage électrique. Le réglage de la position angulaire de la plaque support permet d'ajuster la relation angulaire entre les dents de la roue qui défilent avec la rotation du moteur et les champs magnétiques produits dans les pièces magnétiques pour suivre précisément la variation de position angulaire de la couronne dentée du moteur.

Or, quel que soit le système proposé, il s'avère que le technicien rencontre des difficultés pour effectuer précisément et rapidement le réglage de calibration d'un resolver. Ce réglage demande souvent une grande habilité pour éviter que l'axe du stator de resolver ne se décale par rapport à celui de l'arbre rotor pendant la phase de réglage qui nécessite un certain jeu radial avant le blocage par les organes de serrage. Or, malgré son caractère délicat, il doit en outre être répété chaque fois que des interventions doivent être pratiquées dans le logement d'extrémité de carcasse après enlèvement du couvercle de fermeture extrême qui impliquent un déplacement même léger du stator de resolver.

Une autre difficulté très générale est liée au fait que la sortie de signal du resolver s'effectue normalement par des conducteurs issus du stator resolver qui émergent à la périphérie de celui-ci avant d'être dirigés vers une ouverture dans la carcasse pour être raccordés à un connecteur de signaux. Au montage, on doit donc faire passer ces conducteurs dans cette ouverture au moment de la mise en place du stator de resolver dans le logement prévu à son intention. Une longueur de conducteurs suffisante doit être prévue à cet effet. Elle doit pouvoir ensuite être "absorbée" lors de la mise en place de stator dans un espace où ils ne gênent pas les autres composants. Ceci se fait normalement en prévoyant un espace suffisant dans le voisinage du stator resolver pour enrouler la longueur superflue. Or il s'avère que la présence du mécanisme de blocage du stator lors du réglage de sa position angulaire constitue un obstacle à cet agencement.

Enfin, quelle que soit la précision dans la préparation et l'assemblage des composants il reste que le réglage nécessite un débattement angulaire du stator par rapport à l'ouverture de sortir de conducteurs de connexion vers l'extérieur. Ce déplacement doit pouvoir être absorbé par un excès de longueur des conducteurs par rapport à la quantité nécessaire à une position de réglage moyenne. L'obligation d'accommoder ce mou de connexion dans l'espace réduit disponible à l'intérieur du logement réservé au stator resolver représente une difficulté substantielle dans la plupart des systèmes de montage de resolver actuels.

### EXPOSE DE L'INVENTION

Face à ces difficultés l'invention vise un dispositif permettant un montage et une procédure de réglage angulaire d'un resolver dans une carcasse machine électrique plus faciles à réaliser et à utiliser que par le passé.

A cet effet, l'invention a pour objet un dispositif de montage d'un resolver, selon la revendication 1, dans une machine électrique comportant un stator, un rotor sur un arbre, monté tournant dans le stator, et une carcasse enfermant l'ensemble, dans lequel le resolver comprend un stator de resolver dans un logement à l'intérieur de la carcasse et un rotor de resolver entraîné en rotation par l'arbre du rotor machine à l'intérieur du stator resolver, caractérisé en ce que ce dispositif de montage comporte un moyen de fixation réglable de la position angulaire du rotor de resolver sur l'arbre du rotor machine et un moyen de serrage entre ces deux organes dans la position angulaire choisie pour la conserver en fonctionnement. La faculté de monter le stator dans une position fixée à l'avance facilite grandement le montage. Contrairement à ce que l'état de la technique antérieur aurait pu laisser penser, le demandeur a pu constater qu'un montage permettant le réglage du resolver à partir d'un ajustement angulaire du rotor de resolver par rapport à son axe permettait d'aboutir à des résultats particulièrement intéressants sans créer de difficulté de réalisation ni d'utilisation substantielles, comme il est expliqué ci-après.

Selon un mode de réalisation préféré, ledit dispositif de montage comporte une bague de friction propre à immobiliser le rotor de resolver par frottement sur l'arbre tout en autorisant leur rotation relative par glissement sous l'action d'un couple de réglage suffisant, dépassant largement les couples s'exerçant pendant le fonctionnement normal de la machine. L'élément à friction peut avantageusement être réalisé à l'aide d'une bague de friction dont l'intérieur est en contact frictionnel avec une portée mâle, à la périphérie de l'arbre de la machine, et l'extérieur est en contact frictionnel avec une portée femelle à l'intérieur du corps dudit rotor de resolver.

Tant dans son aspect le plus général que dans le mode de réalisation préféré qui vient d'être défini, le dispositif de montage selon l'invention permet d'éviter de nombreuses difficultés rencontrées dans l'état de la technique, particulièrement dans le cas quasi général où les connexions entre le stator de resolver et l'unité de commande qui gère le fonctionnement de la machine sont réalisées par des conducteurs souples. On a vu en effet que les organes de réglage et de fixation de la position angulaire du stator peuvent en effet interférer avec ces connexions. De plus, pour les besoins du réglage proprement dit, il est nécessaire de laisser suffisamment de « mou » dans les brins de ces conducteurs qui relient les bobinages du stator avec l'extérieur de la machine pour autoriser la rotation du stator dans un sens ou dans l'autre suivant les nécessités du réglage. Il faut ensuite pouvoir gérer le logement des excès de longueur variable de ces brins au moment de la fixation du stator puis lors de la fermeture du logement de l'ensemble dans la carcasse.

Ces difficultés sont complètement résolues avec le système de montage fixe du stator permis par l'invention. Le stator de resolver peut être câblé d'avance avec des longueurs de câbles prédéterminées et prêtes à être mises en place sans tâtonnement au montage. Or le demandeur a pu constater que la nécessité de réaliser, en contrepartie, le réglage avec un montage rotatif du rotor sur l'arbre porte rotor avant de serrer ces deux organes entre eux ne comportait pas les difficultés apparemment dissuasives que pouvaient laisser escompter la consultation de l'état de la technique. De fait
l'accessibilité au rotor de resolver et son réglage angulaire peuvent être effectués par exemple en prévoyant des moyens de prise dans l'extrémité de ce rotor pour un outil permettant de le faire tourner par rapport à l'arbre porte rotor et un moyen de serrage pour solidariser l'arbre et le rotor dans la position angulaire retenue.

Une forme préférée de réalisation de ce réglage angulaire du rotor de resolver, mentionnée plus haut, repose sur une autre constatation a priori surprenante. Dans cette forme d'exécution, le montage du rotor sur l'arbre porte rotor est réalisé à l'aide d'un palier à friction qui permet d'assurer à la fois le réglage angulaire et le serrage de ces deux organes. On aurait pu s'attendre à ce qu'un tel montage soit incompatible avec les objectifs de solidité et de pérennité du réglage nécessaires. On sait en effet que dans une machine électrique le rotor est soumis à des variations de couple qui peuvent être considérables et brutales. Il importe au plus haut point dès lors que les fixations et les réglages utilisés soient résistants aux efforts résultant de ces variations de régime et cela notamment dans des applications à des machines électrique compactes de grande puissance et, qui plus est, susceptibles d'être mises en oeuvre sur de longues périodes dans des fonctions de sécurité dans des véhicules automobiles. L'expérience a montré que tel était le cas. Il n'est pas indispensable de prévoir un organe de serrage du rotor sur l'arbre porte rotor qui soit indépendant du palier de friction permettant le réglage angulaire nécessaire.

Selon une forme avantageuse pour la mise en oeuvre du dispositif de fixation du rotor de resolver conforme au paragraphe précédent, celui-ci comporte un moyen de prise permettant l'entraînement en rotation par rapport à l'arbre du rotor machine pour faire varier sa position angulaire sur l'arbre après l'installation du resolver dans la machine, par exemple avec un outil de couplage prévu à cet effet, permettant de le faire tourner par rapport à l'arbre rotor machine pendant une procédure de réglage. Ce moyen de prise peut comprendre simplement du côté du rotor de resolver un élément de relief qui permet à un outil d'agripper ou de se coupler avec la face d'extrémité axiale externe du rotor de resolver pour lui appliquer un couple de rotation. L'élément de relief peut par exemple être constitué un ou de préférence au moins deux trous borgnes dans ladite face du rotor de resolver. Un outil muni de deux broches correspondant auxdits trous borgnes peut alors être utilisé pour le faire tourner sur l'arbre machine. Ainsi, dans un réglage industriel, avant la fermeture du logement du resolver à l'extrémité de la carcasse, les broches sont introduites dans ces trous borgnes et l'outil est entraîné en rotation, manuellement ou automatiquement, pendant que l'arbre du rotor machine est immobilisé.

Concernant le stator de resolver dans le montage selon l'invention, il possède de préférence une face axiale interne propre à venir en appui contre un épaulement centré sur l'axe de rotation de la machine dans ledit logement de carcasse. Il peut être normalement plaqué contre cet épaulement par le couvercle de fermeture dudit logement d'extrémité de la carcasse.

Selon un mode de réalisation particulier intéressant, l'arbre du rotor machine pénètre dans le logement du stator de resolver dans la carcasse par un alésage axial dont le diamètre est suffisant pour permettre le passage du rotor resolver hors du stator du stator de resolver et hors dudit logement lorsque l'arbre du rotor machine est retiré hors du stator de la machine à partir de son extrémité axialement opposée au logement du resolver.

Ainsi l'invention permet de réaliser un montage de resolver dans lequel, lors de l'assemblage, les éléments du rotor et du stator de la machine sont installés dans la carcasse et l'arbre rotor monté dans les paliers prévus à cet effet. Puis le rotor de resolver peut être monté sur l'arbre de la machine en le faisant glisser axialement sur le dispositif de fixation particulier prévu par friction depuis l'extrémité dudit arbre dans le logement du resolver jusqu'à sa position opérationnelle. Le stator de resolver peut ensuite être monté autour du rotor dans son logement prévu à cet effet. Le calage angulaire du rotor resolver par rapport à son stator peut être effectué à partir de cette même extrémité de l'arbre, avant que logement à l'extrémité de la carcasse ne soit refermé. On remarque qu'une fois ce réglage effectué, si une intervention nécessite un accès à l'arbre de la machine, requérant par exemple le retrait de l'ensemble du rotor machine de son stator, ce retrait peut être fait sans démonter le rotor de resolver de sa position sur l'arbre et par conséquent sans avoir besoin de refaire le réglage du resolver pour cette seule raison au remontage de l'arbre.

D'autres caractéristiques et avantages de l'invention ressortent de la description faite ci-après en référence aux dessins annexés qui montrent, à titre d'exemple non limitatif, une réalisation de l'objet de l'invention.

### BREVE DESCRIPTION DES FIGURES

La figure 1 représente une vue en coupe longitudinale de la machine électrique avec un mode de réalisation de l'invention.

La figure 2 est une vue en perspective du resolver dans une vue en écorché d'une portion de la machine de la figure 1.

La figure 3 est une vue agrandie de la coupe du resolver de la figure 1.

La figure 4 est une vue de gauche du capot d'extrémité de la machine à l'intérieur duquel est logé le resolver.

La figure 5 est une vue de gauche depuis l'extrémité du resolver après enlèvement du capot de la figure 4.

### DESCRIPTION D'UN EXEMPLE DE REALISATION

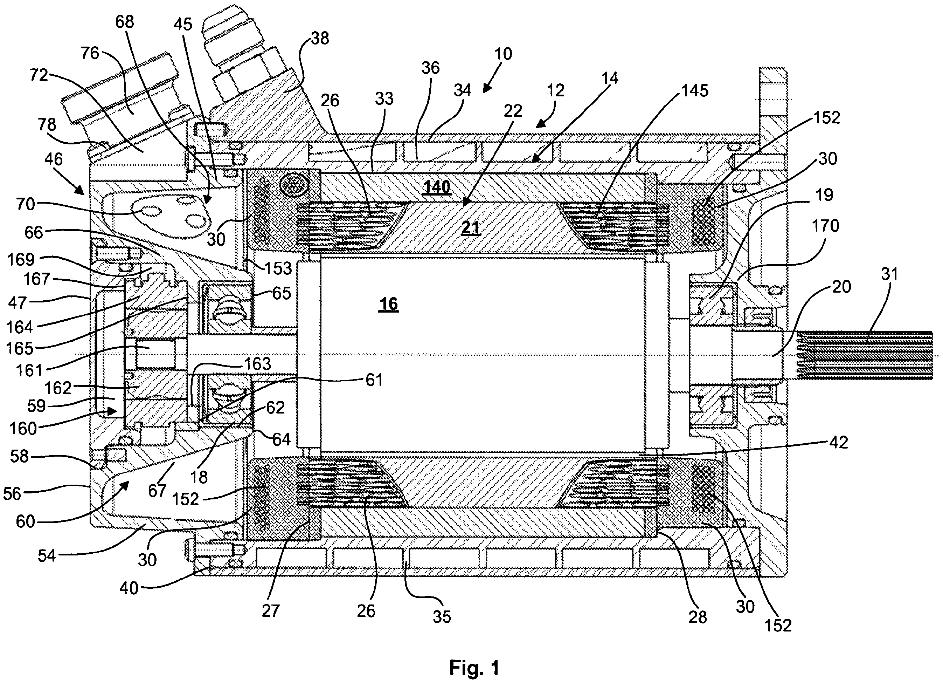

Une machine électrique synchrone 10 représentée à la figure 1 comprend une carcasse externe 12 à l'intérieur de laquelle sont logés un stator 14 et un rotor 16 tournant par rapport au stator autour d'un axe 20 à l'intérieur du stator. Le rotor est monté sur un arbre 31 engagé dans des paliers de roulement 18 et 19 solidaires de la carcasse 12. Le stator 14 comprend un circuit magnétique 22 qui comprend un premier empilement 21 généralement cylindrique de tôles magnétiques. L'empilement 21 est creusé par une série d'encoches périphériques 26 qui, sans être parallèles à l'axe 20, courent entre une de ses faces d'extrémité axiale 27 et son autre face d'extrémité axiale 28, en restant circonscrites à l'intérieur d'une couronne cylindrique virtuelle.

Une culasse 140 constituée par un empilement cylindrique de tôles en forme de couronnes circulaires entoure l'empilement 21 et ferme les extrémités radialement externes des encoches 26 en assurant la continuité du circuit magnétique 22. Dans les encoches 26 sont logés, de façon bien connue, des conducteurs en cuivre 145, repliés au sortir de chaque encoche en formant une boucle afin de pénétrer dans une autre encoche 26. Ils réalisent ainsi trois enroulements ou bobines propres à être connectés électriquement en étoile à une source d'alimentation en énergie ou à un dispositif utilisateur de courant électrique alternatif triphasé, selon un montage bien connu pour ce type de machine. Les ensembles de boucles des conducteurs d'enroulement 145 sortant des faces terminales 27 et 28 forment des "chignons" 152 imprégnés de résine dans des blocs terminaux 30 (figure 1).

Le circuit magnétique 22 est percé axialement d'un canal cylindrique destiné à recevoir avec un entrefer calibré 42 le rotor 16, composé d'un assemblage d'aimants permanents non représentés et monté sur l'arbre 31 dont les extrémités sont engagées chacune dans un des deux paliers 18 et 19 axialement espacés de part et d'autre du stator.

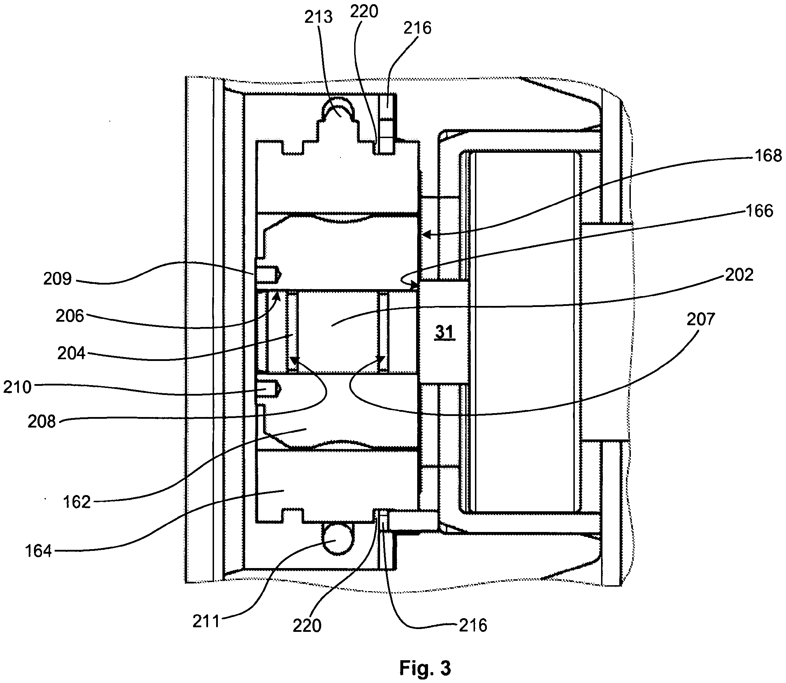

Le stator 12 est logé dans une portion de la carcasse formant un fourreau ou sleeve en deux parties co-axiales. Dans l'espace cylindrique interne délimité par la paroi relativement épaisse d'un manchon 33 constituant la partie interne du fourreau est montée et bloquée en rotation la culasse 140 du circuit magnétique 22. La face radiale externe de la paroi du manchon 33 est garnie de nervures en hélice 35 qui ensemble délimitent trois parois d'un canal 36 de circulation de fluide de refroidissement du corps de stator. La quatrième face du canal 36 est fermée par un manchon externe, ou chemise 34, emboîté autour du manchon 33 (figure 3). Du côté d'une de ses extrémités, la chemise 34 présente une ouverture surmontée d'un embout creux 38 dont le canal interne est relié à travers la dite ouverture à une arrivée de fluide dans le canal de refroidissement 36 ménagé entre les deux manchons 33 et 34 pour former un serpentin en double hélice à la surface cylindrique externe de celui-ci. Le manchon 34 est pourvu d'un deuxième embout, non visible sur le dessin, relié de façon analogue à une autre extrémité du canal 36 pour l'évacuation du fluide de refroidissement.

Les enroulements du circuit magnétique 22 comportent des conducteurs de connexion, non visibles sur la figure, qui sortent des encoches 26 à une extrémité du circuit magnétique 22, située à gauche sur la figure 1 dans cet exemple, pour être raccordés à l'extérieur de la machine comme il est expliqué plus loin. De ce même côté le fourreau formé par l'assemblage des manchons 33 et 34 se termine axialement par une face annulaire 40 perpendiculaire à l'axe 20 dans une position axiale au voisinage de celle des extrémités des blocs de résine 30.

Sur la figure 1, la face d'extrémité annulaire 40 de ce fourreau apparaît comme formée par la face d'extrémité relativement épaisse du manchon interne 33 surmontée radialement vers l'extérieur par l'extrémité axiale du manchon externe 34. Elle se trouve légèrement décalée axialement vers l'extérieur par rapport au bout extrême du bloc de résine 30 dans lequel sont noyés les chignons 152. Ce décalage permet à la lèvre cylindrique terminale 45 d'un capot creux 46, destiné à compléter la carcasse de la machine de ce côté, de venir s'emboîter à l'intérieur de la paroi terminale du manchon 33.

La lèvre 45 du capot 46 est surmontée par une collerette 50 qui marque la limite de la course d'emboîtement de la lèvre 45 dans le manchon 33. Elle est munie de perçages pour des vis 52 de fixation axiale du capot dans la face terminale 40 du fourreau. Du côté opposé à la lèvre 45 le capot 46 présente une paroi cylindrique 54 qui raccorde la collerette 50 à une extrémité axiale du capot, qui possède une face 56 formant une couronne circulaire autour d'une ouverture axiale 59 normalement fermée par un couvercle amovible 47 perpendiculaire à l'axe 20. A partir du bord radial interne 58 de la face 54, la paroi du capot creux 46 se poursuit par un retour axial vers l'intérieur de la machine qui forme un élément de flasque 60 de forme généralement tronconique. La paroi de cet élément de flasque 60 définit à son autre extrémité axiale une portée cylindrique 62 dans laquelle vient se loger le palier de roulement 18 de l'arbre de rotor 31 en butée contre un épaulement annulaire 61. Un alésage 163 permet le passage de l'arbre de rotor 31 de l'autre côté de l'élément de flasque 60. Dans la position d'assemblage représentée dans cet exemple sur la figure 1, les faces axiales internes 64, de la pièce 60, et 65, du palier 18 qu'elle supporte, se trouvent sensiblement dans le même plan normal à l'axe 20 que les parties terminales des blocs de résine 30 enveloppant les chignons 152. Un espace annulaire 153 entre l'extrémité axiale interne de l'élément de flasque 60 et les blocs de résine 30 permet le libre passage des fils de raccordement des bobines du circuit magnétique 22 dans un espace 68 annulaire interne au capot 46, de forme s'évasant axialement et radialement vers l'intérieur, depuis la sortie des encoches jusqu'à une ouverture de sortie 70 ménagée dans le capot 46.

La paroi 66 de l'élément de flasque 60 qui relie sa face terminale 56 à la portée 62 présente une face radiale externe tronconique qui limite, avec la face radiale interne de la paroi cylindrique 54 du capot, un logement de révolution évasé axialement vers l'intérieur de la machine. A la périphérie de cet espace la paroi 54 est percée par deux ouvertures dont l'une, 70, est bien visible sur la figure 1. Du côté externe de la paroi 54 est fixé un embout 72 percé d'un canal interne non visible prolongeant l'ouverture 70. L'embout 72 est surmonté par un connecteur électrique 76 maintenu par des vis 78 sur la face de sortie du canal hors de l'embout 72.

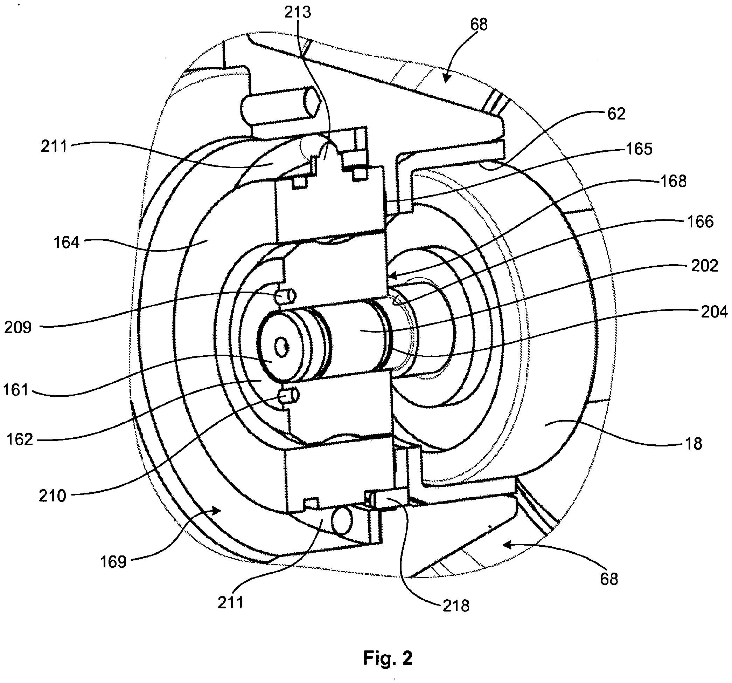

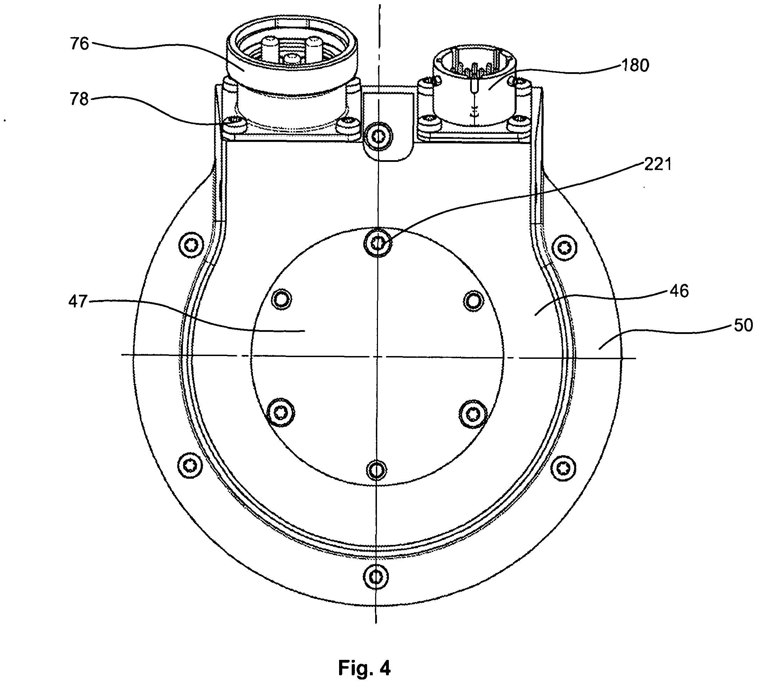

Revenant maintenant à l'élément de flasque 60, la paroi radiale interne de celui-ci définit un logement de forme globalement évasée vers l'extrémité axiale externe du capot 46, qui débouche dans l'ouverture centrale 59 de celui-ci. Dans ce logement est monté un résolveur 160 comportant un rotor 162 fixé à l'extrémité 161 de l'arbre 31 du rotor, du côté du palier de roulement 18 opposé au rotor proprement dit, et un stator 164. Le stator de résolveur 164 est bloqué entre un épaulement 165, autour de l'alésage 163 dans la pièce 60, et un épaulement 167, dans la face axiale interne du couvercle 47 dont la partie centrale présente un évidement comme représenté. Le couvercle 47 est maintenu par des vis 221 à l'extrémité du capot 46 (figure 4). Une goupille 218 (fig. 2) réalise un blocage en rotation, de construction, du stator et de la paroi tronconique 66 de l'élément de flasque 60. Ainsi le stator de resolver 167 est bloqué tant en rotation que dans le sens axial dans la carcasse de la machine.

Le rotor du résolveur 160 est calé sur l'arbre 31 du rotor 16 dans une position angulaire prédéterminée, réglable, qui sert de référence pour transmettre, à chaque instant, une information au système de pilotage de la machine électrique sur la position angulaire du rotor de cette machine dans son stator, conformément au principe de fonctionnement connu des machines synchrones triphasées auto pilotées.

L'arbre machine 31 comporte à son extrémité 161 un épaulement 166 tourné vers l'extérieur contre lequel vient s'appliquer une face latérale 168 du rotor de resolver 162. Entre cet épaulement et l'extrémité de l'arbre 31 est ménagée une portée mâle 204 à l'intérieur de laquelle est logée une bague de friction 202 par exemple à ressort. La bague comporte un face intérieure bombée ou gaufrée qui enserre le fond de la portée mâle 204 tout en admettant un glissement relatif en rotation si le couple appliqué est suffisamment élevé. Les extrémités axiales de cette bague de friction 202 sont retenues axialement par les bords 207 et 208 de la portée mâle 204. Le rotor de resolver 162 est percé d'un alésage central définissant une portée femelle 206 qui est engagé sur le bout d'arbre 31 autour de la bague de friction 202. La face extérieure généralement cylindrique bombée ou gaufrée de la bague de friction 202 exerce un couple de friction sur le rotor pour 162 suffisant l'empêcher de tourner par rapport à l'arbre 31 en fonctionnement normal. Cependant les efforts de frottement combinés des deux faces coaxiales interne et externe de la bague de friction 202 peuvent être surmontés pour les besoins du réglage en exerçant un couple différentiel suffisant entre ces deux pièces, par exemple à l'aide d'un outil spécialement prévu à cet effet. A cet égard, la face terminale du stator est munie de deux petits trous borgnes 209 et 210 formant un moyen de prise grâce auxquels un outil non représenté et comportant deux broches propres à s'engager dans les deux trous borgnes peut être couplé avec le rotor pour le manoeuvrer en rotation aux fins du réglage de l'orientation du rotor de resolver par rapport à l'arbre de la machine 31 comme il sera expliqué plus loin.

On remarque que la disposition décrite ici permet d'effectuer certaines interventions telles que des opérations de maintenance, par exemple en démontant l'arbre 31 à partir de la partie droite de la figure 1 où la machine est fermée par un flasque 170 vissé sur l'autre face terminale du fourreau de carcasse 33, 34, qui supporte le deuxième palier de roulement 19 pour l'autre extrémité de l'arbre 31. Le démontage du flasque permet de libérer la partie droite de l'arbre 31. Le rotor peut être alors extrait du stator en emmenant avec lui, à l'autre extrémité de l'arbre 31, non seulement le palier de roulement 18 qui s'extrait de la portée 62 correspondante de l'élément de flasque 60, mais également le rotor 162 du résolveur à travers l'alésage 163 dont le diamètre est supérieur à celui du rotor de résolveur. Il est intéressant de noter que l'opération peut se faire sans détruire le calage angulaire existant entre les deux rotors. Ceci permet de gagner un temps de réglage précieux au remontage.

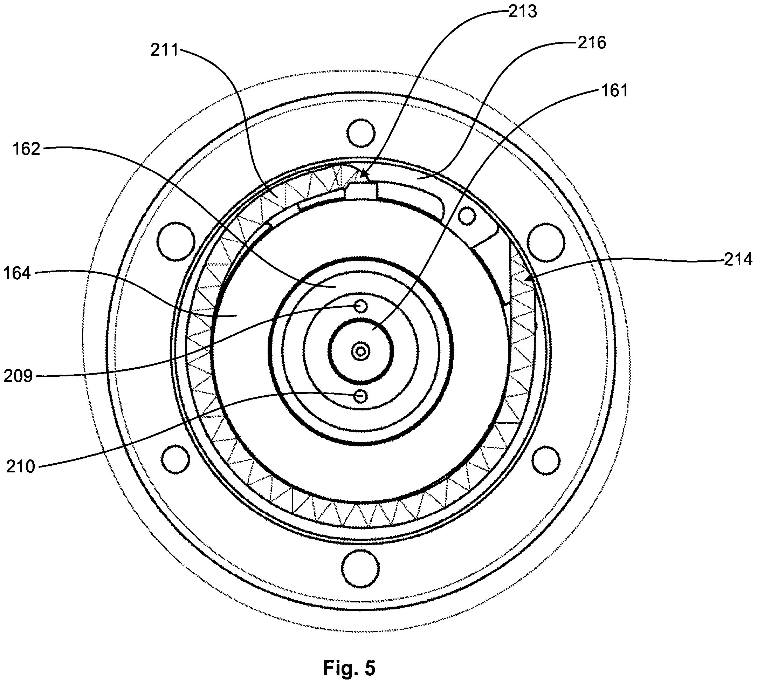

Dans la figure 1 et les figures 2 et 3, on peut remarquer que le sommet du stator de résolveur 164 est surmonté d'un espace annulaire 169 dans la paroi radiale interne de l'élément de flasque 60 entre les deux épaulements 165 et 167 qui le maintiennent en position. On voit sur la figure 2 que cet espace annulaire 169 est libre d'obstacle sur toute la périphérie du stator de resolver. Il forme un logement annulaire qui permet d'accueillir sans entrave le faisceau des conducteurs 211 de liaison des bobines du stator de résolveur, bien visibles sur la figure 5, qui portent les informations utiles au pilotage dont il vient d'être question. Le faisceau de conducteurs 211 en provenance des enroulements du stator de resolver pénètre en un point 213 dans ledit espace annulaire 169. Il parcourt un arc dans cet espace 169 jusqu'en un point 214 où il traverse la paroi 66 de l'élément de flasque 60 en se dirigeant dans l'intervalle 68 vers une ouverture (non visible) pratiquée dans la paroi latérale 54 du capot 46 à un azimut voisin de celui de l'ouverture 70 (figure 1). Comme l'ouverture 70, cette deuxième ouverture est surmontée par un embout, fixé sur le corps extérieur du capot 46. Les conducteurs traversant ladite ouverture parcourent un canal non visible dans ledit embout jusqu'à un connecteur de signaux 180 (voir figure 4).

Au montage, lorsque les éléments du stator de la machine ont été mis en place dans la carcasse et qu'une imprégnation de résine a permis de consolider et d'isoler l'ensemble, le rotor sur son arbre 31 est enfilé dans son logement à l'intérieur du stator. Les conducteurs de liaison du stator de la machine sont passés à travers l'ouverture 70 du capot. Le palier 18 et le capot 46 peuvent être alors installés autour de l'arbre rotor 31, le palier 18 venant prendre sa place dans la portée 62 de l'élément de flasque 60. L'extrémité 161 de l'arbre 31 du rotor machine fait saillie à l'intérieur de l'espace central encore ouvert dans le capot 46, espace délimité radialement par la paroi radiale interne de l'élément de flasque 60. Le rotor 162 du resolver 160 est alors installé en forçant l'alésage (portée femelle 206) du rotor 162 autour de la bague de friction 202 jusqu'à ce que la face 168 vienne en butée contre l'épaulement 166.

Le stator 164 est ensuite installé dans son logement contre l'épaulement 165 de l'élément de flasque avec la goupille de blocage en rotation 218. A ce stade un dispositif de mise en position provisoire du stator est installé sous la forme d'un circlips 216 (figures 3 et 5) dont le bord radial interne vient s'insérer dans une gorge 220 à la périphérie du stator et assure son calage axial en lui laissant un léger jeu radial par rapport au diamètre externe du fond la gorge 220. Le diamètre externe du circlips 216 est juste supérieur à celui de l'espace cylindrique interne 169 assurant le logement dudit stator dans la paroi 66 du flasque 60.

Au montage, le stator avec son faisceau de conducteurs 211 enroulés est inséré autour du rotor 162 à l'intérieur de l'espace annuaire 169 avec une légère compression diamétrale du circlips qui, en se détendant contre la paroi cylindrique de cet espace 169, assure un calage axial à frottement doux de l'ensemble statorique. Comme le montrent bien les figures 2 et 3, la gorge 218 est située du côté axial interne de la périphérie du stator de telle sorte que le circlips vient se caler axialement au fond de l'espace 169 en laissant libre la partie axialement externe de cet espace pour accueillir le faisceau de conducteurs 211. Dans cette position le stator peut être aisément manipulé en rotation ou même glissé axialement pendant l'opération de raccordement des conducteurs 211 vers l'extérieur de la machine, à travers d'abord l'ouverture non représentée dans la paroi 66, vers l'espace interne 68, puis l'ouverture dans la paroi latérale 54 du capot 46 vers le connecteur 180.

Avant de fermer complètement le capot 46 par la mise en place du couvercle 47 et le blocage complet du resolver, on procède alors au réglage de ce dernier pour sélectionner une position angulaire du rotor de resolver 162 qui corresponde à une position des pôles magnétiques du rotor et du stator déterminée par un ensemble de tests. L'ajustement de l'angle du rotor de resolver s'effectue avec un outil possédant deux broches propres à s'engager dans les trous borgnes 209 et 210 de façon qu'on puisse forcer le rotor 162 à tourner en glissant par rapport à l'arbre 31, contre les frottements de rétention exercés par la bague de friction 202, jusqu'à une position qui pourra ensuite être conservée pendant toute la durée d'utilisation sans démontage de la machine.

L'invention n'est pas limitée à l'exemple décrit et représenté ci-dessus; diverses modifications peuvent y être apportées sans sortir de son cadre défini par les revendications annexées.

## Revendications

1. Dispositif de montage d'un resolver dans une machine électrique comportant un stator (14), un rotor (16) sur un arbre (31), monté tournant dans le stator, et une carcasse (12) enfermant l'ensemble, dans lequel le resolver (160) comprend un stator de resolver (164) dans un logement à l'intérieur de la carcasse, et un rotor de resolver (162) rotatif avec l'arbre du rotor machine à l'intérieur du stator resolver, **caractérisé en ce que** le stator de resolver (164) est monté dans une position fixe dans ledit logement et que ce dispositif de montage comporte un moyen de fixation réglable de la position angulaire du rotor de resolver sur l'arbre du rotor machine (31) et un moyen de serrage entre ces deux organes pour conserver ladite position en fonctionnement, ledit moyen de fixation réglable et ledit moyen de serrage étant réalisés à l'aide d'une bague à friction (202) dont l'intérieur est en contact frictionnel avec une portée mâle (204) à la périphérie de l'arbre de la machine (31) et l'extérieur est en contact frictionnel avec une portée femelle (206) à l'intérieur du corps dudit rotor resolver (162).

2. Dispositif de montage d'un resolver dans une machine électrique selon la revendication 1, dans lequel l'arbre (31) du rotor machine est monté rotatif dans un palier (18) supporté par un flasque (60) qui est rattaché à la carcasse de la machine **caractérisé en ce que** le rotor resolver (162) est monté sur une portion dudit arbre qui ressort dudit palier (18) du côté opposé au rotor machine (16).

3. Dispositif de montage d'un resolver dans une machine électrique selon la revendication 2, **caractérisé en ce que** le flasque (60) est rattaché à la carcasse vers son extrémité axiale externe (56) du côté resolver et comporte une paroi (66) qui se projette axialement vers l'intérieur de la carcasse depuis ce rattachement jusqu'à une partie terminale (62) de cette paroi qui porte ledit palier de rotation (18) de l'arbre rotor (31), et que l'espace enveloppé par la face radialement interne de ce flasque forme un logement pour le stator (164) du resolver dans la carcasse et s'élargit globalement entre cette partie terminale (62) et l'extrémité axiale externe (56) de la carcasse,

4. Dispositif de montage d'un resolver dans une machine électrique selon la revendication 3, **caractérisé en ce que** la paroi de la carcasse (54) présente une ouverture pour le raccordement électrique (180) du resolver vers l'extérieur de la machine et le stator resolver est relié à cette ouverture par des conducteurs (211) issus du stator resolver (164) à travers un passage dans la paroi (66) du flasque (60).

5. Dispositif de montage d'un resolver à stator bobiné dans une machine électrique selon la revendication 4, **caractérisé en ce que** les conducteurs (211) issus des bobines du stator de resolver sont logés dans un espace au moins partiellement annulaire dans la paroi radiale interne du flasque (60) autour de ce stator avant de traverser ledit passage dans la paroi (66) du flasque (60) vers l'ouverture de raccordement.

6. Dispositif de montage d'un resolver dans une machine électrique selon l'une des revendications 1 à 5, **caractérisé en ce que** le stator resolver (164) possède une face qui vient buter dans une direction axiale interne contre une butée (165) orientée axialement vers l'extérieur et centrée sur l'axe de l'arbre porte rotor (31) dans ledit flasque (60) et qu'il est maintenu contre ladite butée (165) en position opérationnelle dans la carcasse par un moyen de blocage (47).

7. Dispositif de montage d'un resolver dans une machine électrique selon la revendication 6, **caractérisé en ce que** ladite butée (165) est formée dans une face au moins partiellement annulaire, d'orientation axiale externe, dudit flasque (60) autour d'une ouverture au débouché d'un passage axial (163), à travers lequel passe une partie de l'arbre (31) qui relie le rotor machine du coté axial interne du flasque (60) au rotor resolver du côté axial externe dudit flasque, et **en ce que** la dimension transversale dudit passage (163) est suffisante pour permettre la sortie du rotor resolver (162) hors du stator resolver et à travers ledit passage, dans le cas où le rotor machine est retiré axialement hors du stator machine à partir de son extrémité axialement opposée au resolver (160).

8. Dispositif de montage d'un resolver dans une machine électrique selon la revendication 4, **caractérisé en ce que** le stator de resolver (164) comporte un élément à friction (216) pour permettre, au montage, le maintien provisoire dudit stator en position axiale dans son logement, après que les conducteurs issus du stator resolver (164) ont été passés à travers l'ouverture de raccordement à l'extérieur et avant le blocage définitif dudit stator dans sa position opérationnelle.

9. Dispositif de montage d'un resolver dans une machine électrique selon les revendications 6 et 9, **caractérisé en ce que** ledit élément à friction est un circlips (216) monté dans une gorge (220) extérieure du stator de resolver et dont la périphérie est placée en position de contact à friction dans une gorge circulaire (169) taillée autour du logement dudit stator de resolver (164) et susceptible d'accueillir les conducteurs (211) issus du stator resolver avant leur passage vers l'ouverture de raccordement à l'extérieur.

10. Dispositif de montage d'un resolver dans une machine électrique selon la revendication 1 et dans lequel l'arbre (31) du rotor machine est monté rotatif dans un palier (18) supporté par un flasque (60) qui est rattaché à la carcasse de la machine **caractérisé en ce que** le rotor resolver (162) est monté sur une portion dudit arbre qui ressort dudit palier (18) du côté opposé au rotor machine et **en ce qu'**en position de réglage le rotor de resolver (162) comporte un moyen d'entraînement en rotation par rapport à l'arbre du rotor machine (31) pour régler sa position angulaire sur l'arbre.

11. Dispositif de montage d'un resolver dans une machine électrique selon la revendication 10, **caractérisé en ce que** ledit moyen d'entraînement inclut un accès à la face latérale axialement externe du rotor de resolver et **en ce que** cette face comporte un moyen de prise propre à être couplé avec un outil introduit de l'extérieur par ledit accès pour faire tourner le rotor resolver (162) sur l'arbre rotor machine préalablement immobilisé, pendant une procédure de réglage.

## Claims

1. Device for mounting a resolver in an electric machine comprising a stator (14), a rotor (16) on a shaft (31), mounted rotating in the stator, and a casing (12) enclosing the assembly, in which the resolver (160) comprises a resolver stator (164) in a housing inside the casing, and a resolver rotor (162) rotary with the shaft of the machine rotor inside the resolver stator, **characterized in that** the resolver stator is mounted in a fixed position in said housing, and **in that** this mounting device comprises an adjustable means for fixing the angular position of the resolver rotor on the shaft of the machine rotor (31) and a means for clamping between these two members for preserving the said position during operation, said adjustable fixing means and the said clamping means being embodied with the aid of a friction race (202) whose interior is in frictional contact with a male land (204) at the periphery of the shaft of the machine (31) and whose exterior is in frictional contact with a female land (206) inside the body of the said resolver rotor (162)..

2. Device for mounting a resolver in an electric machine according to Claim 1, in which the shaft (31) of the machine rotor is mounted rotary in a bearing (18) supported by a flange (60) which is attached to the casing of the machine, **characterized in that** the resolver rotor (162) is mounted on a portion of the said shaft which emerges from the said bearing (18) on the opposite side from the machine rotor (16).

3. Device for mounting a resolver in an electric machine according to Claim 2, **characterized in that** the flange (60) is attached to the casing towards its external axial end (56) on the resolver side and comprises a wall (66) which projects axially towards the interior of the casing from this attachment as far as a terminal part (62) of this wall which carries the said rotation bearing (18) of the rotor shaft (31), and that the space enveloped by the radially internal face of this flange forms a housing for the stator (164) of the resolver in the casing and widens globally between this terminal part (62) and the external axial end (56) of the casing,

4. Device for mounting a resolver in an electric machine according to Claim 3, **characterized in that** the wall of the casing (54) exhibits an opening for the electrical connection (180) of the resolver to the exterior of the machine and the resolver stator is linked to this opening by conductors (211) issuing from the resolver stator (164) through a passage in the wall (66) of the flange (60).

5. Device for mounting a resolver with coiled stator in an electric machine according to Claim 4, **characterized in that** the conductors (211) issuing from the coils of the resolver stator are housed in an at least partially annular space in the internal radial wall of the flange (60) around this stator before passing through the said passage in the wall (66) of the flange (60) towards the connection opening.

6. Device for mounting a resolver in an electric machine according to one of Claims 1 to 5, **characterized in that** the resolver stator (164) possesses a face which abuts in an internal axial direction against an abutment (165) oriented axially outwards and centred on the axis of the rotor carrier shaft (31) in the said flange (60) and that it is held against the said abutment (165) in the operational position in the casing by a locking means (47).

7. Device for mounting a resolver in an electric machine according to Claim 6, **characterized in that** the said abutment (165) is formed in an at least partially annular face, of external axial orientation, of the said flange (60) around an opening at the emergence of an axial passage (163), through which passes a part of the shaft (31) which links the machine rotor on the internal axial side of the flange (60) to the resolver rotor on the external axial side of the said flange, and **in that** the transverse dimension of the said passage (163) is sufficient to allow the exit of the resolver rotor (162) out of the resolver stator and through the said passage, in the case where the machine rotor is withdrawn axially out of the machine stator from its end axially opposite from the resolver (160).

8. Device for mounting a resolver in an electric machine according to Claim 4, **characterized in that** the resolver stator (164) comprises a friction element (216) to allow, on mounting, the provisional holding of the said stator in the axial position in its housing, after the conductors issuing from the resolver stator (164) have been passed through the opening for connection to the exterior and before the definitive locking of the said stator in its operational position.

9. Device for mounting a resolver in an electric machine according to Claims 5 and 8, **characterized in that** the said friction element is a circlip (216) mounted in an exterior groove (220) of the resolver stator and whose periphery is placed in a friction contact position in a circular groove (169) cut around the housing of the said resolver stator (164) and able to receive the conductors (211) issuing from the resolver stator before their passage towards the opening for connection to the exterior.

10. Device for mounting a resolver in an electric machine according to Claim 1 and in which the shaft (31) of the machine rotor is mounted rotary in a bearing (18) supported by a flange (60) which is attached to the casing of the machine, **characterized in that** the resolver rotor (162) is mounted on a portion of the said shaft which emerges from the said bearing (18) on the opposite side from the machine rotor and **in that** in the adjustment position the resolver rotor (162) comprises a means of rotational driving with respect to the shaft of the machine rotor (31) so as to adjust its angular position on the shaft.

11. Device for mounting a resolver in an electric machine according to Claim 10, **characterized in that** the said driving means includes an access to the axially external lateral face of the resolver rotor and **in that** this face comprises a hookup means suitable for being coupled with a tool introduced from the exterior through the said access so as to rotate the resolver rotor (162) on the previously immobilized machine rotor shaft, during an adjustment procedure.

## Patentansprüche

1. Vorrichtung zum Einbau eines Resolvers in eine elektrischen Maschine, die einen Stator (14), einen Rotor (16) auf einer Welle (31), die drehend in den Stator eingebaut ist, und ein die Einheit umschließendes Gehäuse (12) enthält, wobei der Revolver (160) einen Resolverstator (164) in einer Aufnahme innerhalb des Gehäuses und einen Resolverrotor (162) mit der Welle des Maschinenrotors drehbar innerhalb des Resolverstators enthält, **dadurch gekennzeichnet, dass** der Resolverstator (164) in einer ortsfesten Stellung in die Aufnahme eingebaut ist, und dass diese Einbauvorrichtung eine einstellbare Festlegungsvorrichtung der Winkelstellung des Resolverrotors auf der Welle des Maschinenrotors (31) und eine Klemmeinrichtung zwischen diesen beiden Organen aufweist, um die Stellung im Betrieb beizubehalten, wobei die einstellbare Festlegungseinrichtung und die Klemmeinrichtung mit Hilfe eines Reibrings (202) hergestellt werden, dessen Innenseite in Reibkontakt mit einer Einsteckauflagefläche (204) am Umfang der Welle der Maschine (31) ist, und die Außenseite in Reibkontakt mit einer Aufnahmeauflagefläche (206) im Inneren des Körpers des Resolverrotors (162) ist.

2. Vorrichtung zum Einbau eines Resolvers in eine elektrische Maschine nach Anspruch 1, bei der die Welle (31) des Maschinenrotors drehbar in ein Lager (18) eingebaut ist, das von einem Flansch (60) getragen wird, der an dem Gehäuse der Maschine befestigt ist, **dadurch gekennzeichnet, dass** der Resolverrotor (162) auf einen Teil der Welle eingebaut ist, der aus dem Lager (18) auf der dem Maschinenrotor (16) entgegengesetzten Seite austritt.

3. Vorrichtung zum Einbau eines Resolvers in eine elektrische Maschine nach Anspruch 2, **dadurch gekennzeichnet, dass** der Flansch (60) am Gehäuse zu seinem äußeren axialen Ende (56) hin auf der Seite des Revolvers befestigt ist und eine Wand (66) aufweist, die axial zum Inneren des Gehäuses von dieser Befestigung bis zu einem Endbereich (62) dieser Wand vorspringt, der das Drehlager (18) der Rotorwelle (31) trägt, und dass der von der radial inneren Seite dieses Flanschs umhüllte Raum eine Aufnahme für den Stator (164) des Revolvers im Gehäuse formt und sich global zwischen diesem Endbereich (62) und dem äußeren axialen Ende (56) des Gehäuses erweitert.

4. Vorrichtung zum Einbau eines Resolvers in eine elektrische Maschine nach Anspruch 3, **dadurch gekennzeichnet, dass** die Wand des Gehäuses (54) eine Öffnung für den elektrischen Anschluss (180) des Resolvers nach außerhalb der Maschine aufweist, und der Resolverstator mit dieser Öffnung durch vom Resolverstator (164) stammende Leiter (211) durch einen Durchgang in der Wand (66) des Flanschs (60) verbunden ist.

5. Vorrichtung zum Einbau eines Resolvers mit gewickeltem Stator in eine elektrische Maschine nach Anspruch 4, **dadurch gekennzeichnet, dass** die von den Spulen des Resolverstators stammenden Leiter (211) in einem zumindest teilweise ringförmigen Raum in der inneren radialen Wand des Flanschs (60) um diesen Stator herum untergebracht sind, ehe sie den Durchgang in der Wand (66) des Flanschs (60) zur Anschlussöffnung durchqueren.

6. Vorrichtung zum Einbau eines Resolvers in eine elektrische Maschine nach einem der Ansprüche 1 bis 5, **dadurch gekennzeichnet, dass** der Resolverstator (164) eine Seite besitzt, die in einer inneren axialen Richtung gegen einen Anschlag (165) anschlägt, der axial nach außen gerichtet und auf die Achse der Rotorträgerwelle (31) im Flansch (60) zentriert ist, und dass er gegen den Anschlag (165) in der Betriebsstellung im Gehäuse durch eine Blockiereinrichtung (47) gehalten wird.

7. Vorrichtung zum Einbau eines Resolvers in eine elektrische Maschine nach Anspruch 6, **dadurch gekennzeichnet, dass** der Anschlag (165) in einer mindestens teilweise ringförmigen Seite äußerer axialer Ausrichtung des Flanschs (60) um eine Öffnung an der Mündung eines axialen Durchgangs (163) geformt ist, durch den ein Teil der Welle (31) geht, die den Maschinenrotor auf der inneren axialen Seite des Flanschs (60) mit dem Resolverrotor auf der äußeren axialen Seite des Flanschs verbindet, und dass die Querabmessung des Durchgangs (163) ausreichend ist, um den Austritt des Resolverrotors (162) aus dem Resolverstator und durch den Durchgang in dem Fall zu ermöglichen, in dem der Maschinenrotor axial aus dem Maschinenstator ausgehend von seinem dem Revolver (160) axial entgegengesetzt liegenden Ende herausgezogen wird.

8. Vorrichtung zum Einbau eines Resolvers in eine elektrische Maschine nach Anspruch 4, **dadurch gekennzeichnet, dass** der Resolverstator (164) ein Reibungselement (216) aufweist, um beim Einbau den vorübergehenden Halt des Stators in axialer Stellung in seiner Aufnahme zu ermöglichen, nachdem die vom Resolverstator (164) stammenden Leiter durch die Anschlussöffnung nach außen geführt wurden und vor der endgültigen Blockierung des Stators in seiner Betriebsstellung.

9. Vorrichtung zum Einbau eines Resolvers in eine elektrische Maschine nach den Ansprüchen 5 und 8, **dadurch gekennzeichnet, dass** das Reibungselement ein Klemmring (216) ist, der in eine äußere Nut (220) des Resolverstators eingebaut ist und dessen Umfang in einer Reibkontaktstellung in einer Kreisnut (169) angeordnet ist, die um die Aufnahme des Resolverstators (164) herum eingeschnitten und in der Lage ist, die vom Resolverstator stammenden Leiter (211) vor ihrem Durchgang zur Anschlussöffnung nach außen aufzunehmen.

10. Vorrichtung zum Einbau eines Resolvers in eine elektrische Maschine nach Anspruch 1 und bei der die Welle (31) des Maschinenrotors drehbar in ein Lager (18) eingebaut ist, das von einem Flansch (60) getragen wird, der am Gehäuse der Maschine befestigt ist, **dadurch gekennzeichnet, dass** der Resolverrotor (162) auf einen Teil der Welle eingebaut wird, der aus dem Lager (18) auf der dem Maschinenrotor entgegengesetzten Seite austritt, und dass in der Einstellstellung der Resolverrotor (162) eine Drehantriebseinrichtung bezüglich der Welle des Maschinenrotors (31) aufweist, um seine Winkelstellung auf der Welle einzustellen.

11. Vorrichtung zum Einbau eines Resolvers in eine elektrische Maschine nach Anspruch 10, **dadurch gekennzeichnet, dass** die Antriebseinrichtung einen Zugang zur axial äußeren Seitenfläche des Resolverrotor enthält, und dass diese Seite eine Eingriffseinrichtung aufweist, die mit einem Werkzeug gekoppelt werden kann, das von außen über den Zugang eingeführt wird, um den Resolverrotor (162) auf der vorher blockierten Maschinenrotorwelle während einer Einstellprozedur zu drehen.
